# EUROPÄISCHE PATENTSCHRIFT

(11) **EP 2 386 399 B1**
(45) Veröffentlichungstag und Bekanntmachung des Hinweises auf die Patenterteilung: **10.06.2015**
(21) Anmeldenummer: 10004324.9
(22) Anmeldetag: 23.04.2010
(51) Int. Cl.: C08J 9/36, B29C 44/56

(54) **Verfahren zum Einbringen von Löchern in eine wasserdichte Beschichtung und Grundkörper mit solcher Beschichtung**
Method for making openings in a waterproof coating and base body with such coating
Procédé pour faire des trous dans un revêtement étanche et corps de base avec un tel revêtement

(43) Veröffentlichungstag der Anmeldung: 16.11.2011
(73) Patentinhaber: MC Beteiligungs-GmbH, 73037 Göppingen (DE)
(72) Erfinder: Pintscher, Harald, 73266 Bissingen (DE)
(74) Vertreter: Ruckh, Rainer Gerhard

(56) Entgegenhaltungen:
- EP-A2- 0 343 596
- EP-A2- 0 463 981
- DE-U1-202008 014 237
- US-A- 2 924 863
- US-A- 2 994 617

## Beschreibung

Die Erfindung betrifft ein Verfahren zum Aufbringen einer wasserdichten Beschichtung auf einem zumindest teilweise elastischen Grundkörper sowie gemäß Anspruch 1 einen solchen Grundkörper mit einer wasserdichten Beschichtung, gemäß Anspruch 13.

Bei den Grundkörpern, auf welche sich die vorliegende Erfindung bezieht, handelt es sich bevorzugt um Kissen, Polster für Möbel, insbesondere Sitzmöbel, die im Außenbereich eingesetzt werden sowie Matratzen und Nackenkissen für den Pflege- beziehungsweise Medizinischen Bereich. Die Grundkörper bestehen dabei insbesondere aus Schaumstoffelementen oder vergleichbaren elastischen Materialien.

Bei Regenfällen oder sonstigem Kontakt mit Wasser saugen sich die Kissen oder Polster aus Schaumstoff sofort mit Wasser voll. Damit sind die Kissen oder Polster über eine lange Zeit unbrauchbar, da es Tage oder sogar Wochen dauert, bis beim Trocknen das Wasser aus dem Innern der Kissen oder Polster ausgetreten ist.

Damit müssen die im Außenbereich verwendeten Polster oder Kissen jeweils vor Regenfällen in geschützte Innenräume verlegt werden. Dies bedingt jedoch einen unerwünschten Aufwand, der insbesondere dann beträchtlich ist, wenn in Gebäuden oder Anlagen wie Hotels oder Wellness-Anlagen Möbel in großer Zahl mit derartigen Elementen verwendet werden.

Prinzipiell ist es bekannt, derartige Schaumstoffelemente mit einem Polyester-Vlies und einer Stoffhülle zu ummanteln, um so einen Schutz gegen Wasser zu erzielen. Nachteilig hierbei ist jedoch, dass die so gebildete Schutzhülle nur wasserabweisend, nicht jedoch wasserdicht ist. Damit aber können so ummantelte Kissen und Polster aus Schaumstoff nicht dauerhaft im Außenbereich belassen werden, da sich diese bei längeren Regenfällen trotz der wasserabweisenden Schutzhülle mit Wasser aufsaugen.

Die DE 20 2008 014 237 U1 betrifft ein Schaumstoffelement mit einer wasserdichten Beschichtung gemäß dem Oberbegriff des Anspruchs 1. Die wasserdichte Beschichtung umfasst eine Grundierung in Form einer mehrschichtigen Netzstruktur, wobei die Netze benachbarter Schichten gekreuzt zueinander verlaufen und die Netzstruktur das Schaumstoffelement umschließt und dabei die Poren an der Oberfläche des Schaumstoffelements vollständig abschließt. Weiterhin vorgesehen ist eine wasserdichte Lackschicht auf der Grundierung, wobei der Lack der Lackschicht durch die Netzstruktur gegen ein Einsickern in das Schaumstoffelement gesichert ist.

Die EP 0 463 981 A2 beschreibt ein Polster, das eine Außenschicht in Form eines Films aufweist, wobei in den Film Mikroperforationen derart eingearbeitet sind, dass Wasserdampf durch den Film dringen kann.

Der Erfindung liegt die Aufgabe zugrunde, Schaumstoffelemente der eingangs genannten Art wasserdicht auszubilden.

Zur Lösung dieser Aufgabe sind die Merkmale der Ansprüche 1 und 13 vorgesehen. Vorteilhafte Ausführungsformen und zweckmäßige Weiterbildungen der Erfindung sind in den Unteransprüchen beschrieben.

Das erfindungsgemäße Verfahren dient zum Aufbringen einer wasserdichten Beschichtung auf einem zumindest teilweisen elastischen Grundkörper gemäß Anspruch 1.

Da die mit dem erfindungsgemäßen Verfahren bearbeiteten Grundkörper eine Beschichtung aufweisen, die nicht nur wasserabweisend, sondern wasserdicht ist, wird bei Kontakt der Grundkörper mit Wasser ein unerwünschtes Aufsaugen dieser Grundkörper mit Wasser vermieden.

Damit sind die erfindungsgemäßen Grundkörper für einen dauerhaften Einsatz im Außenbereich geeignet. Besonders vorteilhaft bilden die Grundkörper dabei Kissen oder Polster von Möbeln, insbesondere Sitzmöbeln, wie sie beispielsweise in Hotel- oder Wellnessanlagen eingesetzt werden.

Die Grundkörper bestehen hierzu bevorzugt aus Schaumstoffelementen oder Elementen aus vergleichbaren elastischen Materialien. Generell können diese auch starre Teilelemente ummanteln, die für eine spezifische Formgebung genutzt werden.

Insbesondere in südlichen Urlaubsländern werden in derartigen Anlagen in großer Anzahl Möbel mit derartigen Polstern und Kissen verwendet, die dauerhaft im Außenbereich eingesetzt werden sollen. In derartigen südlichen Ländern herrschen zwar überwiegend trockene Witterungsverhältnisse. Jedoch treten typischerweise in unregelmäßigen Abständen kurze, heftige Regenschauer auf. Ein Einbringen der Kissen und Polster in geschlossene Räume zum Schutz vor solchen Regenschauern würde einen erheblichen logistischen Aufwand und Personaleinsatz erfordern. Dieser Aufwand wird durch die erfindungsgemäße wasserdichte Beschichtung der Grundkörper vermieden, da durch die wasserdichte Beschichtung die Grundkörper gegen ein Vollsaugen mit Wasser geschützt sind.

Ein weiterer wesentlicher Vorteil der Erfindung besteht darin, dass die wasserdichte Beschichtung die Eigenschaften des Grundkörpers, insbesondere des Schaumstoffelements nicht beeinträchtigt. Für die Verwendung als Kissen oder Polster sind die Nachgiebigkeit und Elastizität des Grundkörpers, insbesondere des Schaumstoffelements ein wichtiges Qualitätsmerkmal. Durch das Aufbringen der erfindungsgemäßen wasserdichten Beschichtung wird diese Elastizität beziehungsweise Nachgiebigkeit des Grundkörpers, insbesondere des Schaumstoffelements nicht oder nicht nennenswert beeinträchtigt.

Dies wird einerseits dadurch erreicht, dass die wasserdichte Beschichtung einerseits eine hinreichend geringe Schichtdicke aufweist und zudem aus Materialien besteht, die zumindest teilweise selbst elastische Eigenschaften aufweisen.

Ein wichtiger Faktor zur Erhaltung der elastischen Eigenschaften der Grundkörper, insbesondere der Schaumstoffelemente ist die erfindungsgemäße Ausbildung der Grundierung auf diesen. Wesentlich hierbei ist, dass die Grundierung nicht wie die wasserdichte Lackschicht auf das jeweilige Schaumstoffelement als homogene Schicht aufgespritzt wird.

Vielmehr werden durch mehrere aufeinander folgende Sprühvorgänge in Kreuzgängen mehrlagige Netzstrukturen gebildet, die eine mehrfach verwobene Netzstruktur bilden. Durch das Aufsprühen der Grundierung in Kreuzgängen wird erreicht, dass die Netzstrukturen in aufeinander folgenden Schichten gekreuzt zueinander verlaufen.

Besonders vorteilhaft wird die Grundierung mit einer Düsenanordnung aufgesprüht wird, deren Düsen Düsenöffnungen mit Durchmessern im Bereich von 1 mm bis 3 mm aufweisen. Die Düsen werden mit Druckluft betrieben, wodurch die Grundierung in Form von durch die Druckluft getrockneten Fäden aufgetragen werden. Zum Auftrag einer ersten Schicht der Grundierung werden auf einer Fläche des Grundkörpers die Düsen mehrfach parallel laufend über die Fläche geführt, so dass auf der Fläche eine Anordnung von parallel laufenden und dicht aneinander liegenden Fäden entsteht. Zur Ausbildung der Netzstruktur wird auf entsprechende Weise eine zweite Schicht auf die erste Schicht aufgetragen. Die Längsachsen der Fäden der ersten Schicht verlaufen in einem Winkel geneigt zu den Fäden der zweiten Schicht.

Die so gebildete mehrlagige Netzstruktur bildet eine nachgiebige elastische Umhüllung des Grundkörpers, insbesondere des Schaumstoffelements derart, dass die Poren an der Oberfläche des Grundkörpers, insbesondere des Schaumstoffelements durch die Grundierung abgedeckt werden. Die sehr kleinen Zwischenräume zwischen den Fäden der einzelnen Netze in einer Schicht und zwischen den einzelnen Netzschichten sind dabei an die Porengrößen des Grundkörpers, insbesondere des Schaumstoffelements so angepasst, dass die Poren durch die Netzstruktur abgedeckt sind, so dass auf die Grundierung aufgebrachter Lack, der die Lackschicht bilden soll, nicht in die Poren des Schaumstoffelements einsickern kann.

Durch die getrennte mehrlagige Netzstruktur sind dabei die Zwischenräume zwischen den Fäden in einer Schicht durch die Fäden der darüber liegenden und darunter liegenden Schichten teilweise abgedeckt, so dass im Ergebnis die mehrlagige Netzstruktur verhindert, dass bei Aufspritzen der Lackschicht vor deren Verfestigung Lacktropfen durch diese verschachtelte und verzweigte Netzstruktur durchdringen können. Die Undurchlässigkeit der Netzstruktur wird insbesondere durch eine hinreichend große Anzahl von Netzschichten erreicht, wobei sich als vorteilhaft erwiesen hat, mehr als vier, vorzugsweise sechs übereinander liegende Netze für die Ausbildung der Netzstruktur vorzusehen.

Die so ausgebildete Netzstruktur ist zwar selbst nicht wasserdicht, verhindert jedoch ein Durchsickern von Lack durch die Netzstruktur. Die Wasserdichtheit selbst wird durch die Lackschicht, die auf die Grundierung aufgespritzt wird, erreicht.

Wesentlich bei der Aufbringung der Grundierung ist, dass der Grundkörper, insbesondere das Schaumstoffelement lückenlos und vollständig über die gesamte Oberfläche mit der Netzstruktur überzogen ist. Dasselbe gilt für die auf die Grundierung aufgebrachte Lackschicht.

Der wasserdichte Abschluss der Oberfläche des Grundkörpers kann gemäß einer vorteilhaften Ausführungsform der Erfindung dadurch noch weiter verbessert werden, indem auf die Lackschicht eine mechanische Schutzschicht aufgebracht, vorzugsweise aufgespritzt wird. Die mechanische Schutzschicht deckt die wasserdichte Lackschicht vollständig ab und schützt diese gegen mechanische Belastungen wie Stoßbelastungen.

Insbesondere im Bereich der Ecken und Kanten eines Grundkörpers treten erhöhte mechanische Belastungen auf, so dass prinzipiell die Gefahr einer Ablösung der wasserdichten Beschichtung von dem Grundkörper besteht. Um diesen unerwünschten Effekt zu vermeiden, kann besonders vorteilhaft vor Auftragen der Grundierung eine Klebeschicht auf die Oberfläche des Grundkörpers aufgetragen werden. Dabei kann sich die Klebeschicht über die gesamte Oberfläche des Grundkörpers erstrecken. Alternativ können nur kritische Stellen wie die Bereiche von Ecken und Kanten des Grundkörpers mit der Klebeschicht beschichtet werden. Vorteilhaft können zum Auftrag der Klebeschicht Düsen der Düsenanordnung, mittels derer auch die Grundierung aufgetragen wird, genutzt werden. Damit kann der Auftrag der Klebeschicht und der Grundierung zu einem automatisierten Prozess zusammengefasst werden.

Bedingt durch Witterungseinflüsse, wie Sonneneinstrahlung und der gleichen, können die erfindungsgemäßen Elemente, insbesondere Kissen und Polster dadurch beeinträchtigt werden, dass sich durch Lufteinschlüsse Blasen in der Beschichtung des Grundkörpers bilden. Dies beeinträchtigt einerseits den Gesamteindruck der Elemente. Anderseits kann dies auch zu Beschädigungen der wasserdichten Beschichtung führen.

Um diesen unerwünschten Effekt zu vermeiden, werden in die wasserdichte Beschichtung Löcher eingearbeitet, wobei die Durchmesser der Löcher so dimensioniert sind, dass die Wasserdichtheit der Beschichtung vollständig erhalten bleibt. Die Löcher durchdringen dabei die gesamte wasserdichte Beschichtung bestehend aus der Grundierung und der Lackschicht sowie optional der mechanischen Schutzschicht und der Klebeschicht. Dementsprechend wurden die Löcher erst dann in die wasserdichte Beschichtung eingearbeitet, nachdem diese komplett auf den Grundkörper aufgetragen wurde.

Durch die eingebrachten Löcher erfolgt ein Luftdruckausgleich zwischen dem von der wasserdichten Beschichtung ummantelten Grundkörper und der Umgebungsatmosphäre, wodurch unerwünschte Blasenbildungen in der wasserdichten Beschichtung auf einfache Weise vermieden werden.

Vorteilhaft werden die Löcher mit Nadeln und/oder Laserstrahlen in die wasserdichte Beschichtung eingearbeitet. Die Durchmesser der Löcher liegen im Bereich zwischen 20 µm und 150 µm, bevorzugt etwa bei 100 µm. Zudem hat sich als vorteilhaft erwiesen, die Abstände zwischen benachbarten Löchern im Bereich zwischen 1 mm und 3 mm, bevorzugt im Bereich von 1,2 mm bis 1,5 mm, zu wählen.

Die Erfindung ist besonders vorteilhaft im Bereich von Möbeln für den outdoor-Bereich anwendbar, jedoch nicht darauf beschränkt. Insbesondere ist die Erfindung auch im Bereich der Medizintechnik einsetzbar. Dort können beispielsweise die Grundkörper von Matratzen gebildet sein, die mit der erfindungsgemäßen Beschichtung versehen werden.

Die Erfindung wird im Nachstehenden anhand der Zeichnungen erläutert. Es zeigen:
- Figur 1:: Sitzmöbel mit Polstern und Kissen bestehend aus Schaumstoffelementen.
- Figur 2:: Erstes Ausführungsbeispiel eines Schaumstoffelements.
- Figur 3:: Zweites Ausführungsbeispiel eines Schaumstoffelements.

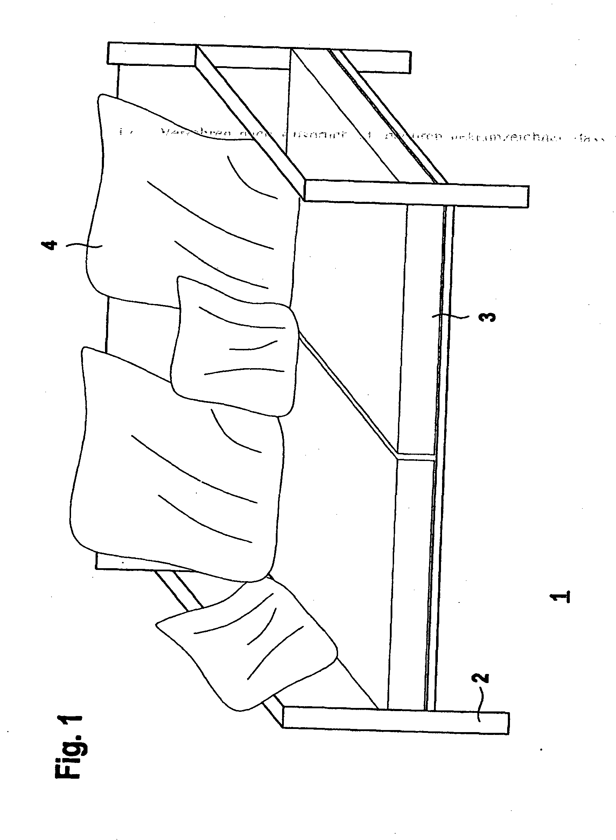

Figur 1 zeigt ein Sitzmöbel 1 in Form einer Sitzecke, die für den Außenbereich einer Hotel- oder Wellnessanlage bestimmt ist. Auf dem Gestell 2 der Sitzecke sind Polster 3 als Sitzflächen sowie Kissen 4 als Rückenlehnen vorgesehen.

Die Kissen 4 und Polster 3 bestehen im Wesentlichen aus Grundkörpern in Form von Schaumstoffelementen 5, die von Schonbezügen oder dergleichen umhüllt sein können.

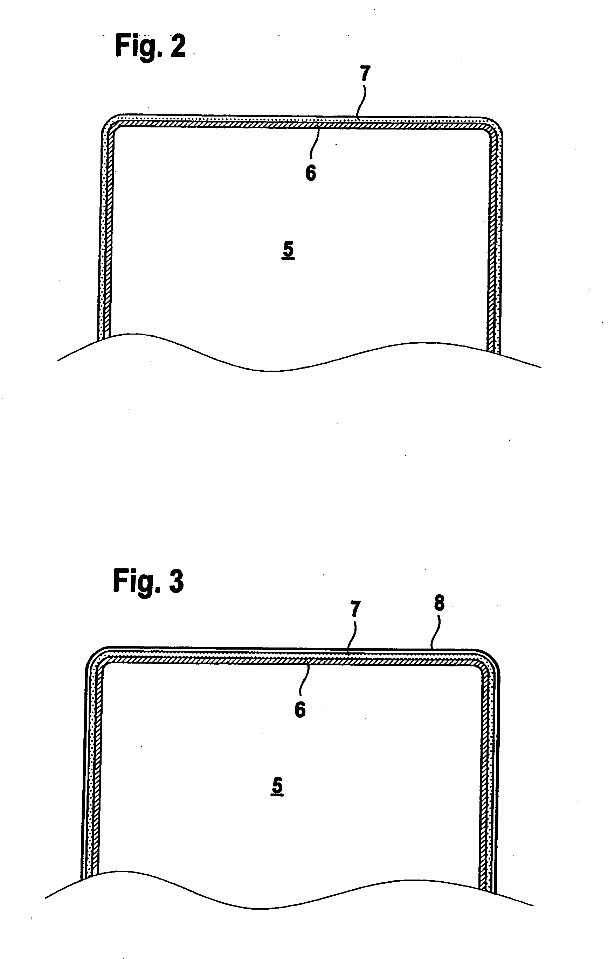

Die Schaumstoffelemente 5 selbst, von welchen in den Figuren 2 und 3 zwei Ausführungsbeispiele schematisch dargestellt sind, sind wasserdicht.

Das Schaumstoffelement 5 gemäß Figur 2 weist eine wasserdichte Beschichtung auf, die aus zwei aufeinander liegenden Schichten gebildet ist. Die erste, unmittelbar auf die Oberfläche des Schaumstoffelements 5 aufgebrachte Schicht bildet eine Grundierung 6 in Form einer mehrschichtigen Netzstruktur, wobei die Netze benachbarter Schichten gekreuzt zueinander verlaufen. Diese Netzstruktur umschließt das Schaumstoffelement 5 vollständig.

Zum Aufbringen dieser Netzstruktur wird das Grundierungsmittel in mehreren Kreuzgängen nacheinander auf die Oberfläche des Schaumstoffelements 5 aufgesprüht. Dabei werden die unterschiedlichen Kreuzgänge ohne Pausen nacheinander aufgesprüht.

Zum Aufsprühen der Grundierung wird eine Düsenanordnung von parallel in Abstand zueinander angeordneten Düsen verwendet. Die Düsen weisen jeweils eine Düsenöffnung auf, deren Durchmesser etwa bei 2 mm liegt. Die Düsen werden mit Druckluft betrieben. Dadurch wird erreicht, dass mit einer Düse ein aus der Grundierung bestehender Faden aufgetragen wird, der bei Auftreffen auf dem Schaumstoffelement 5 bereits teilweise, bevorzugt fast vollständig getrocknet ist. Die Düsenanordnung wird mehrfach über die Fläche des Schaumstoffelements 5 bewegt. Bei jedem Überstreichen der Fläche wird mit jede Düse entlang einer geraden Bahn bewegt, so dass ein geradliniger, sich über die gesamte Länge dessen Fläche erstreckender Faden auf dem Schaumstoffelement 5 erzeugt wird. Am Ende der Bahn erfolgt im seitlicher Vorsatz der Düsenanordnung, so dass bei dem nächsten Überstreichen der Fläche des Schaumstoffelements 5 wieder geradlinige Fäden erzeugt werden, die parallel zu den Fäden laufen, die bei der ersten Bahn erzeugt werden. Dieser Vorgang wird solange wiederholt, bis als erste Schicht der Netzstruktur die gesamte Fläche des Schaumstoffelements 5 mit parallel laufenden Grundierungsfäden überdeckt sind, wobei benachbarte Fäden dicht nebeneinander in einer Ebene liegen.

Dann wird die Fläche unter der Düsenanordnung gedreht, vorzugsweise um 90 °. Dann wird die zweite Schicht der Netzstruktur aufgebracht, und zwar in derselben Weise wie die erste Schicht der Netzstruktur, das heißt auch die zweite Schicht der Netzstruktur der Grundierung 6 besteht aus einer Anordnung von in einer Ebene parallel laufenden, dicht aneinander liegenden Fäden. Dabei verlaufen die Fäden der zweiten Schicht in einem Winkel von 90 ° zu den Fäden der ersten Schicht, wodurch bereits eine Netzstruktur gebildet wird. Diese Netzstruktur wird in gleicher Weise auf den rechtlichen Flächen des Schaumstoffelements 5 aufgebracht. Danach wird der gesamte Vorgang zwei bis dreimal wiederholt, so dass die Grundierung 6 eine sechs bis achtlagige Netzstruktur bildet.

Die Schichtdicke der so gebildeten Grundierung 6 beträgt etwa 0,01 mm bis 0,02 mm, vorzugsweise etwa 0,015 mm.

Auf die so gebildete Grundierung 6 wird als zweite Schicht eine wasserdichte Lackschicht 7 aufgetragen, vorzugsweise aufgespritzt. Die Lackschicht 7 deckt die Grundierung 6 vollständig ab. Die Schichtdicke der wasserdichten Lackschicht 7 beträgt etwa 0,01 mm bis 0,03 mm, vorzugsweise etwa 0,02 mm.

Die die Grundierung 6 bildende mehrlagige Netzstruktur ist zwar nicht wasserdicht, verhindert jedoch ein Durchsickern des Lacks in die Poren des Schaumstoffelements 5 und sorgt so dafür, dass sich auf der Grundierung 6 die vollständig geschlossene wasserdichte Lackschicht 7 bilden kann.

Die Grundierung 6 besteht besonders vorteilhaft aus Zelugen S 1623, einem Produkt der Firma ZELU Chemie, Murr. Dieses Produkt ist im wesentlichen von einem Lösungsmittelkleber auf Basis Polychloropren gebildet. Die hiermit gebildete Grundierung 6 weist gute elastische Eigenschaften und eine hohe Beständigkeit, insbesondere Hychrolysebeständigkeit auf.

Prinzipiell kann auch eine Grundierung 6 bestehend aus folgenden Komponenten eingesetzt werden:
- Pehapol Primer, mit einem Anteil von größer 80 %, bevorzugt etwa 90%
- Pehapol Basislack, mit einem Anteil von kleiner als 10 %, bevorzugt etwa 5 %
- PUR-Paste, mit einem Anteil von kleiner als 10 %, bevorzugt etwa 5 %

Sämtliche Komponenten dieser Grundierung 6 sind durch Handelsnamen bezeichnet, die jeweils Produkte der Firma Peter-Lacke GmbH, Herforderstr. 80, 32120 Hiddenhausen kennzeichnen.

Bei der Komponente Pehapol-Primer handelt es sich um ein Gemisch aus Tetrahydrofuran mit einem Anteil von 50 bis 100 % und aus Methylethylketon mit einem Anteil von 10 bis 25 % sowie weiteren ungefährlichen Beimengungen.

Vorzugsweise wird ein farbloser Pehapol-Primer eingesetzt.

Die Komponente Pehapol-Basislack wird bevorzugt in der Version Pehapol-Sensor 2K-Basislack blau eingesetzt, die folgende Inhaltsstoffe enthält:
n-Butylacetat: 25 - 50 %
Xylene: 10 - 25%
Kaolin: 2,5 - 10%
Ethylbenzol: ≤ 2,5 %
Methoxypropylacetat PMA: ≤ 2,5 %
Lösungsmittelnaptha (Erdöl): ≤ 2,5 %
sowie weitere ungefährliche Beimengungen.

Die Komponente PUR-Paste bildet ein PU-Elastomer in organischen Lösungsmitteln und enthält insbesondere folgende Komponenten:
Aceton: 25 - 50 %
Methylethylketon: 10 - 25 %
Ethylacetat: 10 - 25%.

Die wasserdichte Lackschicht besteht aus folgenden Komponenten:
- Pehabin Hydro-Grundierung mit einem Anteil von größer 80 %, bevorzugt etwa 90 %
- Wasser mit einem Anteil von kleiner als 20 %, bevorzugt etwa 10%.

Auch bei Pehabin Hydro-Grundierung handelt es sich um einen Handelsnamen für ein Produkt der Firma Peter-Lacke, wobei bevorzugt eine farblose Variante dieser Hydro-Grundierung verwendet wird.

Die Pehabin Hydro-Grundierung weist elastische Eigenschaften im verfestigten Zustand auf und enthält folgende Komponenten:
Butyldigliykol: 2,5 - 10 %
N-Methyl-2-pyrrolidon: ≤ 2,5 %
Triethylamin: ≤ 2,5 %
sowie ungefährliche Beimengungen.

Um ein unerwünschtes Ablösen der wasserdichten Beschichtung von dem Schaumstoffelement 5 zu vermeiden kann vor Auftrag der Grundierung 6 direkt auf das Schaumstoffelement 5 eine Klebeschicht aufgebracht werden. Als Klebemittel zur Ausbildung der in Figur 2 nicht dargestellten Klebeschicht wird bevorzugt ein Lösungsmittelkleber auf Basis Polyurethan eingesetzt. Vorzugsweise wird hierbei das Produkt Zelugen S 1579 der Firma ZELU Chemie, Murr eingesetzt.

Figur 3 zeigt ein weiteres Ausführungsbeispiel eines Schaumstoffelements 5 mit einer wasserdichten Beschichtung. Dieses Schaumstoffelement 5 enthält analog zur Ausführungsform gemäß Figur 2 die auf das Schaumstoffelement 5 aufgebrachte Grundierung 6 sowie die auf die Grundierung 6 aufgebrachte wasserdichte Lackschicht 7. Prinzipiell kann auch in diesem Fall zwischen dem Schaumstoffschicht und der Grundierung 6 eine Klebeschicht vorgesehen sein. Zusätzlich weist das Schaumstoffelement 5 gemäß Figur 3 eine mechanische Schutzschicht 8 auf, die auf die wasserdichte Lackschicht 7 aufgebracht, vorzugsweise aufgespritzt ist. Diese Schutzschicht 8 schützt die wasserdichte Lackschicht 7 vor mechanischen Beschädigungen. Die Schutzschicht 8 deckt die wasserdichte Lackschicht 7 vollständig ab und weist eine Schichtdicke von 0,02 mm bis 0,04 mm, bevorzugt etwa 0,03 mm auf.

Die mechanische Schutzschicht 8 besteht aus folgenden Komponenten:
- Pehapol Härter elastisch, mit einem Anteil von 15 % - 25 %, bevorzugt etwa 20 %
- Pehapol 2K-Softlack, mit einem Anteil von 35 % - 45 %, bevorzugt etwa 40 %
- Pehapol Spezialverdünnung, mit einem Anteil von 35 % - 45 %, bevorzugt etwa 40 %.

Bei sämtlichen Komponenten handelt es sich wieder um mit Handelsnamen bezeichnete Produkte der Firma Peter-Lacke.

Die Komponente Pehapol-Härter elastisch stellt eine Mischung von synthetischen Kunststoffen und organischen Lösungsmitteln dar und enthält insbesondere folgende Inhaltsstoffe.
Hexamethylen-1,6 - di iso cyanat homopolymer: 25 - 50 %
Polyisocyanat: 25 - 50 %
n-Butylacetat: 10 - 25%
Xylene: 2,5 - 10%
Hexametylen-1,6 di iso cyanat: ≤ 2,5 %

Die Komponente Pehapol 2K-Softlack enthält neben ungefährlichen Beimengungen folgende Inhaltsstoffe:
n-Butylacetat: 25 - 50 %
Xylne: 2,5 - 10%
Bis (1,2,2,6,6-pentamethyl - 4 - piperidinyl) - 2-(4-methoxybenzyliden) malonat: ≤ 2,5 %
Lösungsmittelnaphta (Erdöl): ≤ 2,5 %.

Die Komponente Pehapol-Spezialverdünnung enthält neben ungefährlichen Beimengungen folgende Inhaltsstoffe:
n-Butylacetat: 50 -100 %
Lösungsmittelnaphta (Erdöl): 2,5 - 10 %
1,2,4-Trimethylbenzol: 2,5 - 10 %
Mesitylen: ≤ 2,5 %
2-Butanol: ≤ 2,5 %
Propylbenzol: ≤ 2,5 %

Die wasserdichten Beschichtungen des Schaumstoffelements 5 gemäß den Figuren 2 und 3 sind von Löchern durchsetzt, wodurch ein Druckausgleich zwischen dem Schaumstoffelement 5 und der Umgebungsatmosphäre geschaffen wird. Hierzu durchsetzen die Löcher die wasserdichte Beschichtung, das heißt deren sämtliche Teilschichten, vollständig.

Die Durchmesser der Löcher sind so gewählt, dass die Wasserdichtheit der Beschichtung erhalten bleibt. Die Durchmesser der Löcher liegen im Bereich von 20 µm bis 150 µm. Bevorzugt liegen die Durchmesser der Löcher im Bereich von 100 µm bis 120 µm. Damit kann durch die Löcher kein Wasser von außen in das Schaumstoffelement 5 eindringen. Jedoch erfolgt über die Löcher ein Gasautausch, so dass ein Gasaustausch im Inneren des Schaumstoffelements 5 und dadurch bedingte Blasenbildungen der Beschichtung vermieden werden. Vorteilhaft erstrecken sich die Löcher über die gesamte Oberfläche der Beschichtung. Der Abstand zweier benachbarter Löcher liegt zweckmäßig im Bereich von 1 mm bis 3 mm und besonders bevorzugt im Bereich von 1,2 mm bis 1,5 mm. Die Löcher können einerseits mit Nadeln in die Beschichtung eingestochen werden. Anderseits können die Löcher mit Laserstrahlen in die Beschichtung eingearbeitet werden.

### Bezugszeichenliste

- (1): Sitzmöbel
- (2): Gestell
- (3): Polster
- (4): Kissen
- (5): Schaumstoffelement
- (6): Grundierung
- (7): Lackschicht
- (8): Schutzschicht

## Patentansprüche

1. Verfahren zum Aufbringen einer wasserdichten Beschichtung auf einem, zumindest teilweise elastischen Grundkörper, welcher mit der wasserdichten Beschichtung ein Kissen (4) oder ein Polster (3) für ein Möbel bildet, das im Außenbereich eingesetzt wird, der die folgende Verfahrensschritt umfasst:
• Aufbringen einer Grundierung (6) auf dem Grundkörper derart, dass die Grundierung (6) eine mehrschichtige Netzstruktur bildet, wobei die Netze benachbarter Schichten gekreuzt zueinander verlaufen und die Netzstruktur den Grundkörper vollständig umschließt und dabei die Poren an der Oberfläche des Grundkörpers vollständig abschließt,
• Aufbringen einer wasserdichten Lackschicht (7) auf die Grundierung (6), wobei der Lack der Lackschicht (7) durch die Netzstruktur gegen ein Einsickern in dem Grundkörper gesichert ist, **gekennzeichnet durch** dass
• Einbringen von Löchern in die auf dem Grundkörper aufgebrachte wasserdichte Beschichtung, wobei die Durchmesser der Löcher zwischen 20 µm und 150 µm liegen, so dass die Wasserdichtheit der Beschichtung erhalten bleibt.

2. Verfahren nach Anspruch 1, **dadurch gekennzeichnet, dass** die Lackschicht (7) die Grundierung (6) vollständig abdeckt.

3. Verfahren nach einem der Ansprüche 1 oder 2, **dadurch gekennzeichnet, dass** auf die Lackschicht (7) eine mechanische Schutzschicht (8) aufgebracht wird, wobei die Schutzschicht (8) die Lackschicht (7) vollständig abdeckt.

4. Verfahren nach einem der Ansprühe 1 bis 3, **dadurch gekennzeichnet, dass** vor Aufbringen der Grundierung (6) eine Klebeschicht auf dem Grundkörper aufgetragen wird.

5. Verfahren nach einem der Ansprüche 1 bis 4, **dadurch gekennzeichnet, dass** die Grundierung (6) mit einer Düsenanordnung aufgesprüht wird.

6. Verfahren nach Anspruch 5, **dadurch gekennzeichnet, dass** die Düsenanordnung Düsen aufweist, deren Düsenöffnungen Durchmesser im Bereich von 1 mm bis 3 mm aufweisen.

7. Verfahren nach einem der Ansprüche 5 oder 6, **dadurch gekennzeichnet, dass** die Düsen mit Druckluft betrieben werden, wodurch die Grundierung (6) in Form von durch die Druckluft getrockneten Fäden aufgetragen wird.

8. Verfahren nach einem der Ansprüche 5 bis 7, **dadurch gekennzeichnet, dass** zum Auftrag einer ersten Schicht der Grundierung (6) auf einer Fläche des Grundkörpers die Düsen mehrfach parallel laufend über die Fläche geführt werden, so dass auf der Fläche eine Anordnung von parallel laufenden und dicht aneinander liegenden Fäden entsteht, und dass anschließend zur Ausbildung der Netzstruktur auf entsprechende Weise eine zweite Schicht auf die erste Schicht aufgetragen wird, wobei die Längsachsen der Fäden der ersten Schicht in einem Winkel geneigt zu den Fäden der zweiten Schicht verlaufen.

9. Verfahren nach einem der Ansprüche 5 bis 7, **dadurch gekennzeichnet, dass** mit Düsen der Düsenanordnung die Klebeschicht aufgesprüht wird.

10. Verfahren nach einem der Ansprüche 3 bis 9, **dadurch gekennzeichnet, dass** die Lackschicht (7) und die mechanische Schutzschicht jeweils aufgespritzt werden.

11. Verfahren nach einem der Ansprüche 1 bis 10, **dadurch gekennzeichnet, dass** die Löcher mit Nadeln und/oder Laserstrahlen in die wasserdichte Beschichtung eingearbeitet werden.

12. Verfahren nach Anspruch 11, **dadurch gekennzeichnet, dass** die Durchmesser der Löcher im Bereich zwischen 20 µm und 150 µm liegen, und dass die Abstände zwischen benachbarten Löchern im Bereich von 0,5 mm bis 3 mm liegen.

13. Grundkörper bestehend zumindest teilweise aus elastischem Material, mit einer wasserdichten Beschichtung, wobei der Grundkörper mit der Wasserdichten Beschichtung ein Kissen (4) oder ein Polster (3) für ein Möbel bildet, das im Außenbereich eingesetzt wird, erhältlich nach dem Verfahren gemäß einem der Ansprüche 1 bis 10, wobei die wasserdichte Beschichtung umfasst:
• eine Grundierung (6) in Form einer mehrschichtigen Netzstruktur, wobei die Netze benachbarter Schichten gekreuzt zueinander verlaufen und die Netzstruktur den Grundkörper umschließt und dabei die Poren an der Oberfläche des Grundkörpers vollständig abschließt,
• eine wasserdichte Lackschicht (7) auf der Grundierung (6), wobei der Lack der Lackschicht (7) durch die Netzstruktur gegen ein Einsickern in den Grundkörper gesichert ist, **gekennzeichnet dadurch, dass**
• die wasserdichte Beschichtung von Löchern durchsetzt ist, deren Durchmesser zwischen 20 µm und 150 µm liegen, so dass die Wasserdichtheit der Beschichtung erhalten ist.

14. Grundkörper nach Anspruch 13, **dadurch gekennzeichnet, dass** dieser von einem Schaumstoffelement (5) gebildet ist.

## Claims

1. Method for applying a waterproof coating to an at least partly resilient base body, which forms together with the waterproof coating a cushion (4) or a squab (3) for an item of furniture used outdoors, which comprises the following method steps:
- applying a priming (6) to the base body in such a way that the priming (6) forms a multi-layered network structure, wherein the networks of adjacent layers run crosswise with respect to one another and the network structure completely surrounds the base body and in that case completely closes off the pores at the surface of the base body,
- applying a waterproof lacquer layer (7) to the priming (6), wherein the lacquer of the lacquer layer (7) is secured by the network structure against seeping into the base body,
**characterised by**
- forming holes in the waterproof coating applied to the base body, wherein the diameters of the holes lie between 20 microns and 150 microns so that the watertightness of the coating is retained.

2. Method according to claim 1, **characterised in that** the lacquer layer (7) completely covers the priming (6).

3. Method according to one of claims 1 and 2, **characterised in that** a mechanical protective layer (8) is applied to the lacquer layer (7), wherein the protective layer (8) completely covers the lacquer layer (7).

4. Method according to any one of claims 1 to 3, **characterised in that** an adhesive layer is coated on the base body before application of the priming (6).

5. Method according to any one of claims 1 to 4, **characterised in that** the priming (6) is sprayed on by a nozzle arrangement.

6. Method according to claim 5, **characterised in that** the nozzle arrangement comprises nozzles, the nozzle openings of which have diameters in the range of 1 millimetre to 3 millimetres.

7. Method according to any one of claims 5 and 6, **characterised in that** the nozzles are operated by compressed air, whereby the priming (6) is coated in the form of threads dried by the compressed air.

8. Method according to any one of claims 5 to 7, **characterised in that** for the coating of a first layer of the priming (6) on a surface of the base body the nozzles are guided several times running in parallel over the surface so that an arrangement of parallelly extending and closely adjacent threads arises on the surface, and that subsequently for formation of the network structure a second layer is coated on the first layer in corresponding manner, wherein the longitudinal axes of the threads of the first layer extend inclined at an angle to the threads of the second layer.

9. Method according to any one of claims 5 to 7, **characterised in that** the adhesive layer is sprayed on by nozzles of the nozzle arrangement.

10. Method according to any one of claims 3 to 9, **characterised in that** the lacquer layer (7) and the mechanical protective layer are each sprayed on.

11. Method according to any one of claims 1 to 10, **characterised in that** the holes are formed in the waterproof coating by needles and/or laser beams.

12. Method according to claim 11, **characterised in that** the diameters of the holes lie in the range between 20 microns and 150 microns and that the spacings between adjacent holes lie in the range of 0.5 millimetres to 3 millimetres.

13. Base body consisting at least partly of resilient material, with a waterproof coating, wherein the base body forms together with the waterproof coating a cushion (4) or a squab (3) for an item of furniture used outdoors, obtained in accordance with the method according to any one of claims 1 to 10, wherein the waterproof coating comprises:
- a priming (6) in the form of a multi-layered network structure, wherein the networks of adjacent layers run crosswise with respect to one another and the network structure encloses the base body and in that case completely closes off the pores at the surface of the base body,
- a waterproof lacquer layer (7) on the priming (6), wherein the lacquer of the lacquer layer (7) is secured by the network structure against seeping under the base body,
**characterised in that**
- the waterproof coating is penetrated by holes, the diameters of which lie between 20 microns and 150 microns, so that the watertightness of the coating is retained.

14. Base body according to claim 13, **characterised in that** this is formed by a foam material element (5).

## Revendications

1. Procédé conçu pour déposer un revêtement étanche à l'eau sur un corps de base qui est au moins partiellement élastique et forme, avec ledit revêtement étanche à l'eau, un coussin (4) ou un rembourrage (3) dédié à un meuble utilisé en extérieur, englobant les étapes opératoires suivantes :
• dépôt d'une couche de fond (6) sur ledit corps de base, de façon telle que ladite couche de fond (6) forme une structure réticulaire à strates multiples, sachant que les réseaux de strates voisines s'étendent avec entrecroisement réciproque et que ladite structure réticulaire entoure intégralement le corps de base, en occultant alors l'intégralité des pores à la surface dudit corps de base,
• dépôt d'une couche (7) de vernis étanche à l'eau, sur la couche de fond (6), la structure réticulaire prévenant une infiltration du vernis de ladite couche (7) dans ledit corps de base, **caractérisé par**
• un façonnage de trous dans le revêtement étanche à l'eau déposé sur le corps de base, les diamètres desdits trous étant compris entre 20 µm et 150 µm, entretenant ainsi l'étanchéité à l'eau dudit revêtement.

2. Procédé selon la revendication 1, **caractérisé par le fait que** la couche (7) de vernis recouvre intégralement la couche de fond (6).

3. Procédé selon l'une des revendications 1 ou 2, **caractérisé par le fait qu'**une couche de protection mécanique (8) est déposée sur la couche (7) de vernis, ladite couche de protection (8) recouvrant l'intégralité de ladite couche (7) de vernis.

4. Procédé selon l'une des revendications 1 à 3, **caractérisé par le fait qu'**une couche adhésive est appliquée sur le corps de base préalablement au dépôt de la couche de fond (6).

5. Procédé selon l'une des revendications 1 à 4, **caractérisé par le fait que** la couche de fond (6) est pulvérisée à l'aide d'un ensemble de buses.

6. Procédé selon la revendication 5, **caractérisé par le fait que** l'ensemble de buses comporte des buses dont les ajutages présentent des diamètres situés dans la plage de 1 mm à 3 mm.

7. Procédé selon l'une des revendications 5 ou 6, **caractérisé par le fait que** les buses sont actionnées par de l'air comprimé, la couche de fond (6) étant appliquée sous la forme de fils séchés sous l'effet de l'air comprimé.

8. Procédé selon l'une des revendications 5 à 7, **caractérisé par le fait que**, pour assurer l'application d'une première strate de la couche de fond (6) sur une surface du corps de base, les buses sont répétitivement guidées au-dessus de ladite surface avec étendue parallèle en donnant ainsi naissance, sur ladite surface, à un agencement de fils s'étendant parallèlement et en juxtaposition intime ; et **par le fait qu'**une seconde strate est ensuite appliquée sur ladite première strate de manière correspondante, en vue de produire la structure réticulaire, les axes longitudinaux des fils de ladite première strate s'étendant à l'oblique en décrivant un angle par rapport aux fils de ladite seconde strate.

9. Procédé selon l'une des revendications 5 à 7, **caractérisé par le fait que** la couche adhésive est pulvérisée par des buses de l'ensemble de buses.

10. Procédé selon l'une des revendications 3 à 9, **caractérisé par le fait que** la couche (7) de vernis et la couche de protection mécanique sont respectivement déposées par injection.

11. Procédé selon l'une des revendications 1 à 10, **caractérisé par le fait que** les trous sont pratiqués, dans le revêtement étanche à l'eau, au moyen d'aiguilles et/ou de rayons laser.

12. Procédé selon la revendication 11, **caractérisé par le fait que** les diamètres des trous se situent dans la plage de 20 µm à 150 µm ; et **par le fait que** les espacements, entre des trous voisins, se situent dans la plage de 0,5 mm à 3 mm.

13. Corps de base pouvant être obtenu selon le procédé conforme à l'une des revendications 1 à 10, constitué au moins partiellement d'un matériau élastique présentant un revêtement étanche à l'eau, ledit corps de base formant, avec ledit revêtement étanche à l'eau, un coussin (4) ou un rembourrage (3) dédié à un meuble utilisé en extérieur, sachant que ledit revêtement étanche à l'eau inclut :
• une couche de fond (6), revêtant la forme d'une structure réticulaire à strates multiples, sachant que les réseaux de strates voisines s'étendent avec entrecroisement réciproque et que ladite structure réticulaire entoure intégralement le corps de base, en occultant alors l'intégralité des pores à la surface dudit corps de base,
• une couche (7) de vernis étanche à l'eau, placée sur ladite couche de fond (6), la structure réticulaire prévenant une infiltration du vernis de ladite couche (7) dans ledit corps de base, **caractérisé par le fait que**
• le revêtement étanche à l'eau est traversé par des trous dont les diamètres sont compris entre 20 µm et 150 µm, procurant ainsi l'étanchéité à l'eau dudit revêtement.

14. Corps de base selon la revendication 13, **caractérisé par le fait que** ce dernier est constitué d'un élément (5) en une mousse.
